# EUROPEAN PATENT SPECIFICATION

(11) **EP 2 867 833 B1**
(45) Date of publication and mention of the grant of the patent: **05.09.2018**
(21) Application number: 13737075.5
(22) Date of filing: 27.06.2013
(51) Int. Cl.: G06Q 10/10, H04N 21/25, H04N 21/2668, H04N 21/4788

(54) **SYSTEM AND METHOD FOR DETERMINING APPROPRIATE CONTENT FOR AN EVENT CONTENT STREAM**
SYSTEM UND VERFAHREN ZUR BESTIMMUNG GEEIGNETER INHALTE FÜR EINEN EREIGNISINHALTSTROM
SYSTÈME ET PROCÉDÉ POUR DÉTERMINER UN CONTENU APPROPRIÉ POUR UN FLUX DE CONTENU D'ÉVÉNEMENT

(30) Priority: 27.06.2012 US 201213534555; 28.06.2012 US 201261665833 P
(43) Date of publication of application: 06.05.2015
(73) Proprietor: Google LLC, Mountain View, CA 94043 (US)
(72) Inventor: BINTLIFF, Sky, Mountain View, California 94043 (US)
(74) Representative: Betten & Resch
(86) International application number: PCT/US2013/048318
(87) International publication number: WO 2014/004907

(56) References cited:
- WO-A2-2011/149961
- WO-A2-2011/149961
- US-A1- 2009 319 472
- US-A1- 2011 270 923
- US-A1- 2012 027 256
- US-B2- 7 620 902

## Description

### Technical Field

This disclosure relates to online collaboration and, more particularly, to sharing content.

### Background

The Internet currently allows for the free exchange of ideas and information in a manner that was unimaginable only a couple of decades ago. One such use for the Internet is as a communication medium, whether it is via one-on-one exchanges or multiparty exchanges. For example, two individuals may exchange private emails with each other. Alternatively, multiple people may participate on a public website in which they may post entries that are published for multiple people to read. Examples of such websites may include but are not limited to product / service review sites, social networks, and topical blogs.

WO 2011/149961 A2 relates to user-submitted content and, in particular, to an association between user-submitted story content and timeframe and/or location identifying metadata. The user-submitted content (e.g., stories) may be associated with descriptive metadata (intersection metadata), such as a timeframe, location, tags, and so on. The user-submitted content may be browsed and/or searched using the descriptive metadata. Intersection criteria comprising a prevailing timeframe, a location, and/or other metadata criteria may be used to identify an intersection space comprising one or more stories. The stories may be ordered according to relative importance, which may be determined (at least in part) by comparing story metadata to the intersection criteria.

### Summary of Disclosure

The invention is defined in the independent claims. The dependent claims define embodiments of the invention.

A method may include defining, on one or more processors, an online collaborative space associated with an event. The method may also include associating, on the one or more processors, a plurality of event participants with the event. The method may further include receiving, on the one or more processors, content contributions from one or more of the event participants. The method may also include determining if the received content contributions are associated with the event. If the received content contributions are associated with the event, the method may also include transmitting, on the one or more processors, an event content update to a client event application based on the received content contributions to provide a live stream of event content.

One or more of the following features may be included. In some embodiments, determining may be based upon, at least in part, exchangeable image file format (EXIF) information associated with the received content. In some embodiments, determining may be based upon, at least in part, geolocation information. Determining based upon geolocation information may include comparing an event location with a location of associated with the content contributions. Determining may be based upon, at least in part, identification of an event participant. The method may also include providing, at the online collaborative space, a user option to include or exclude received content contributions. In some embodiments, determining may be based upon, at least in part, time information associated with at least one of the event and the content contributions.

A computer-readable storage medium may have stored thereon instructions that when executed by a machine result in one or more operations. Operations may include defining, on one or more processors, an online collaborative space associated with an event. Operations may also include associating, on the one or more processors, a plurality of event participants with the event. Operations may further include receiving, on the one or more processors, content contributions from one or more of the event participants. Operations may also include determining if the received content contributions are associated with the event. If the received content contributions are associated with the event, operations may also include transmitting, on the one or more processors, an event content update to a client event application based on the received content contributions to provide a live stream of event content.

One or more of the following features may be included. In some embodiments, determining may be based upon, at least in part, exchangeable image file format (EXIF) information associated with the received content. In some embodiments, determining may be based upon, at least in part, geolocation information. Determining based upon geolocation information may include comparing an event location with a location of associated with the content contributions. Determining may be based upon, at least in part, identification of an event participant. Operations may also include providing, at the online collaborative space, a user option to include or exclude received content contributions. In some embodiments, determining may be based upon, at least in part, time information associated with at least one of the event and the content contributions.

A computing system includes one or more processors. The one or more processors may be configured to define, on one or more processors, an online collaborative space associated with an event. The one or more processors may be configured to associate, on the one or more processors, a plurality of event participants with the event. The one or more processors may be configured to receive, on the one or more processors, content contributions from one or more of the event participants. The one or more processors may be configured to determine if the received content contributions are associated with the event. If the received content contributions are associated with the event, the one or more processors may be configured to transmit, using the one or more processors, an event content update to a client event application based on the received content contributions to provide a live stream of event content.

One or more of the following features may be included. In some embodiments, determining may be based upon, at least in part, exchangeable image file format (EXIF) information associated with the received content. In some embodiments, determining may be based upon, at least in part, geolocation information. Determining based upon geolocation information may include comparing an event location with a location of associated with the content contributions. Determining may be based upon, at least in part, identification of an event participant. Operations may also include providing, at the online collaborative space, a user option to include or exclude received content contributions. In some embodiments, determining may be based upon, at least in part, time information associated with at least one of the event and the content contributions.

The details of one or more implementations are set forth in the accompanying drawings and the description below. Other features and advantages will become apparent from the description, the drawings, and the claims.

### Brief Description of the Drawings

FIG. 1 is a diagrammatic view of a distributed computing network including a computing device that executes an event process according to an embodiment of the present disclosure;
FIG. 2 is a flowchart of the event process of FIG. 1, according to an embodiment of the present disclosure;
FIG. 3 is diagrammatic representation of a collaborative online space that may be defined, at least in part, by the event process of FIG. 1, according to an embodiment of the present disclosure;
FIG. 4 is a diagrammatic view of the computing device of FIG. 1, according to an embodiment of the present disclosure.
Like reference symbols in the various drawings indicate like elements.

### Detailed Description of Example Embodiments

According to some example embodiments consistent with the present disclosure, an online space may be provided for an event. The online space may include, for example, one or more web pages or accounts that may, for example, be standalone web pages or accounts or may be provided within a social network website. The online space may enable information regarding the event to be published and/or shared among participants of the event and/or with other users. In some embodiments, information regarding the event may be uploaded by participants in the event and also shared with others via the online space in a generally contemporaneous manner. In various embodiments, the information regarding the event may include, for example, video, photos, or other content. In some embodiments, the event process may implement one or more protections (e.g. server-side) that may determine whether or not to exclude content that are unrelated to the Event.

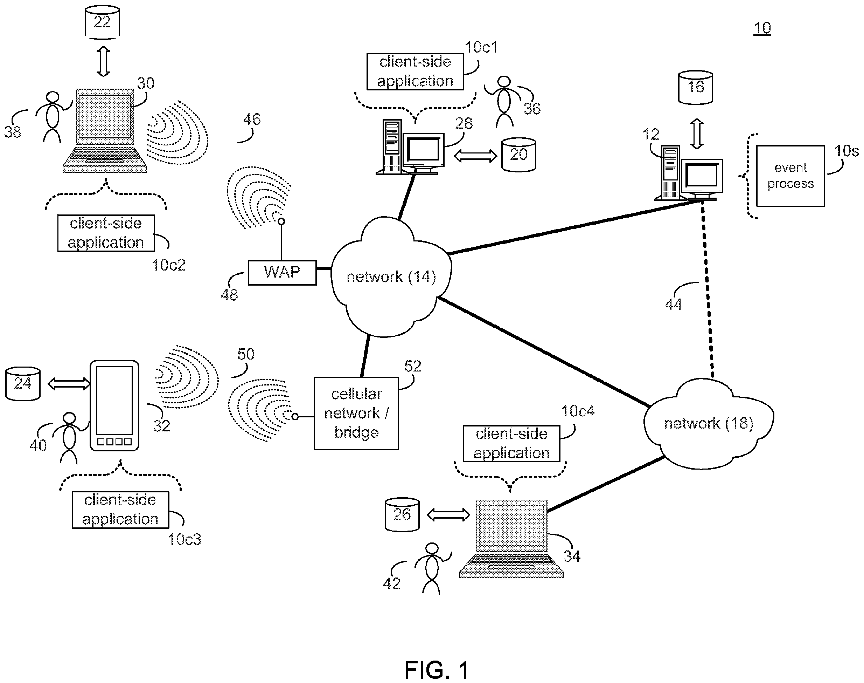

Referring to FIG. 1, there is shown event process 10. For the following discussion, it is intended to be understood that event process 10 may be implemented in a variety of ways. For example, event process 10 may be implemented as a server-side process, a client-side process, or a server-side / client-side process.

For example, event process 10 may be implemented as a purely server-side process via event process 10s. Alternatively, event process 10 may be implemented as a purely client-side process via one or more of client-side application 10c1, client-side application 10c2, client-side application 10c3, and client-side application 10c4. Alternatively still, event process 10 may be implemented as a server-side / client-side process via event process 10s in combination with one or more of client-side application 10c1, client-side application 10c2, client-side application 10c3, and client-side application 10c4. In such an example, at least a portion of the functionality of event process 10 may be performed by event process 10s and at least a portion of the functionality of event process 10 may be performed by one or more of client-side application 10c1, 10c2, 10c3, and 10c3.

Accordingly, event process 10 as used in this disclosure may include any combination of event process 10s, client-side application 10c1, client-side application 10c2, client-side application 10c3, and client-side application 10c4.

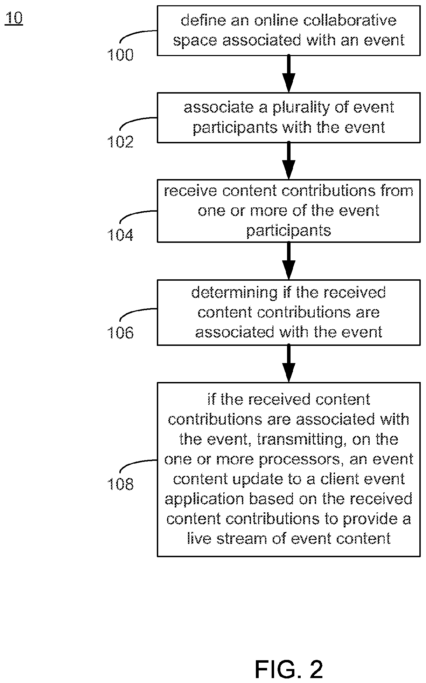

Referring also to FIG. 2 and as will be discussed below in greater detail, event process 10 may define 100 an online collaborative space associated with an event. Event process 10 may also associate 102 a plurality of event participants with the event. Content contributions may be received 104 from one or more of the event participants.

Event process 10 may also determine if the received content contributions are associated with the Event. If the received content contributions are associated with the event, event process 10 may transmit an event content update to a client event application based on the received content contributions to provide a live stream of event content.

Event process 10s may be a server application and may reside on and may be executed by computing device 12, which may be connected to network 14 (e.g., the Internet or a local area network). Examples of computing device 12 may include, but are not limited to: a personal computer, a server computer, a series of server computers, a mini computer, a mainframe computer, or a dedicated network device.

The instruction sets and subroutines of event process 10s, which may be stored on storage device 16 coupled to computing device 12, may be executed by one or more processors (not shown) and one or more memory architectures (not shown) included within computing device 12. Examples of storage device 16 may include but are not limited to: a hard disk drive; a tape drive; an optical drive; a RAID device; an NAS device, a Storage Area Network, a random access memory (RAM); a read-only memory (ROM); and all forms of flash memory storage devices.

Network 14 may be connected to one or more secondary networks (e.g., network 18), examples of which may include but are not limited to: a local area network; a wide area network; or an intranet, for example.

Examples of client-side applications 10c1, 10c2, 10c3, 10c4 may include but are not limited to a web browser, a game console user interface, a television user interface, or a specialized application (e.g., an application running on a mobile platform). The instruction sets and subroutines of client-side application 10c1, 10c2, 10c3, 10c4, which may be stored on storage devices 20, 22, 24, 26 (respectively) coupled to client electronic devices 28, 30, 32, 34 (respectively), may be executed by one or more processors (not shown) and one or more memory architectures (not shown) incorporated into client electronic devices 28, 30, 32, 34 (respectively). Examples of storage devices 20, 22, 24, 26 may include but are not limited to: hard disk drives; tape drives; optical drives; RAID devices; random access memories (RAM); read-only memories (ROM), and all forms of flash memory storage devices.

Examples of client electronic devices 28, 30, 32, 34 may include, but are not limited to, data-enabled, cellular telephone 28, laptop computer 30, personal digital assistant 32, personal computer 34, a notebook computer (not shown), a server computer (not shown), a gaming console (not shown), a data-enabled television console (not shown), and a dedicated network device (not shown). Client electronic devices 28, 30, 32, 34 may each execute an operating system.

Users 36, 38, 40, 42 may access event process 10 directly through network 14 or through secondary network 18. Further, event process 10 may be accessed through secondary network 18 via link line 44.

The various client electronic devices (e.g., client electronic devices 28, 30, 32, 34) may be directly or indirectly coupled to network 14 (or network 18). For example, data-enabled, cellular telephone 28 and laptop computer 30 are shown wirelessly coupled to network 14 via wireless communication channels 46, 48 (respectively) established between data-enabled, cellular telephone 28, laptop computer 30 (respectively) and cellular network / bridge 50, which is shown directly coupled to network 14. Further, personal digital assistant 32 is shown wirelessly coupled to network 14 via wireless communication channel 52 established between personal digital assistant 32 and wireless access point (i.e., WAP) 54, which is shown directly coupled to network 14. WAP 54 may be, for example, an IEEE 802.11a, 802.11b, 802.11g, 802.11n, Wi-Fi, and/or Bluetooth device that is capable of establishing wireless communication channel 52 between personal digital assistant 32 and WAP 54. Additionally, personal computer 34 is shown directly coupled to network 18 via a hardwired network connection.

As generally discussed above, event process 10 may define 100 an online collaborative space associated with an event. For example, in an embodiment, a user (e.g., user 36) may access event process 10s (e.g., using client-side application 10c1, or another application) and may request that an event be created. The event may include, for example, a planned gathering or activity, such as a party, meeting, or the like, by which various individuals may plan to come together at a common place and time. In other embodiments, the event may include a common purpose or subject, but not necessarily a common time and/or place. For example, the event may include an opening of a movie. In such an embodiment, individuals may attend openings of the movie at different times and different locations (e.g., different theaters, cities, etc.). Various additional / alternative events may similarly be created.

In response to receiving the request to create an event, event process 10 may define 100 an online collaborative space associated with the event. The online collaborative space may include, for example, one or more web pages (e.g., which may be stand-alone web pages and/or may include one or more web pages within a social networking website), an event wall (e.g., which may be associated with one or more web pages within a social networking web site), an account (e.g., an account of an online space such as a social networking web site or other collaborative online space). The online collaborative space may include various additional / alternative online spaces that may be accessed by one or more users. In some embodiments, the user (e.g., user 36) may provide various attributes of the event, e.g., which event process 10 may associate with the event. For example, user 36 may provide a title or name identifying the event, as well other information identifying the event, such as a time and location of the event. In some embodiments, event process 10 may define 100 the online collaborative space associated with the event, in which the various attributes provided by the user may also be associated with the event and/or with the online collaborative space.

Event process 10 may also associate 102 a plurality of event participants with the event. For example, in an embodiment, user 36 (e.g., the user who may initially create the event) may identify one or more individuals who are invited to the event. In such an embodiment, event process 10 may associate 102 the one or more individuals identified by user 36 as being event participants. In some embodiments, the associating 102 the one or more individuals with the event may include inviting the one or more individuals with the event. For example, in some embodiments, event process 10 may transmit an invitation to the one or more individuals (e.g., based on, at least in part, identifying information provided by user 36, such as an email address or social networking identifier associated with each of the one or more individuals). In some embodiments, the one or more individuals may be identified by user 36 based on, at least in part, membership of the one or more individuals in a defined group, such as membership in a social network group, participation in an online conversation (e.g., email conversation, contribution to comments within an online space, such as a social network page, a blog, or the like). Various additional and/or alternative groups may similarly be utilized for identifying the one or more individuals.

In addition / as an alternative to user 36 identifying individuals who are invited to the event, in some embodiments, one or more individuals initially invited by user 36 may be enabled to invite one or more additional individuals. In such an embodiment, event process 10 may associate such additional individuals with the event as also being event participants. Further, in some embodiments, the online collaborative space associated with the event may be accessible by individuals who have not been invited to, or otherwise associated with, the event. In some embodiments, such individuals may indicate an intent to join the event (e.g., by submitting an electronic request, such as selecting a joint option associated with the online collaborative space associated with the event). In response to an individual indicating an intent to join the event, event process 10 may associate 102 the individual with the event as an event participant.

Content contributions may be received 104 from one or more of the event participants. For example, event process 10 may allow one or more of the event participants associated with the event to upload content to the online collaborative space associated with the event. In some embodiments, a plurality of the event participants may upload content to the online collaborative space associated with the event. Further, in some embodiments, one or more of the event participants may upload content contributions during the event (e.g., during a time period for which the event was scheduled, as may have been input by a user as a property of the event when the event was created). In such an embodiment, event process 10 may receive one or more content contributions from one or more event participants while the event is ongoing. In various additional and/or embodiments, event participants may additionally and/or alternatively be enabled to upload content contributions before the scheduled time of the event and/or after the scheduled time of the event.

The content uploaded to the online collaborative space associated with the event may include content contributions to the online collaborative space associated with the event. The content contributions to the online collaborative space may be received 104 by event process 10. In some embodiments, one or more of the content contributions may include media content associated with the event. The media content may include, for example, one or more of video content, photographic content, audio content, and text content. Video content may include, for example, a video clip associated with the event (e.g., a video clip that may have been recorded at the event, etc.). Similarly, photographic content may include one or more photographs associated with the event (e.g., a photograph that may have been taken at the event). In various embodiments, the media content may further include audio content associated with the event (e.g., an audio clip that may have been recorded at the event) and/or text content associated with the event (e.g., a comment relating to the event and or relating to another content contribution). In various embodiments, the event participants may capture the media content and upload the media content using any suitable devices, such as a mobile computing device like a smartphone, tablet, or the like.

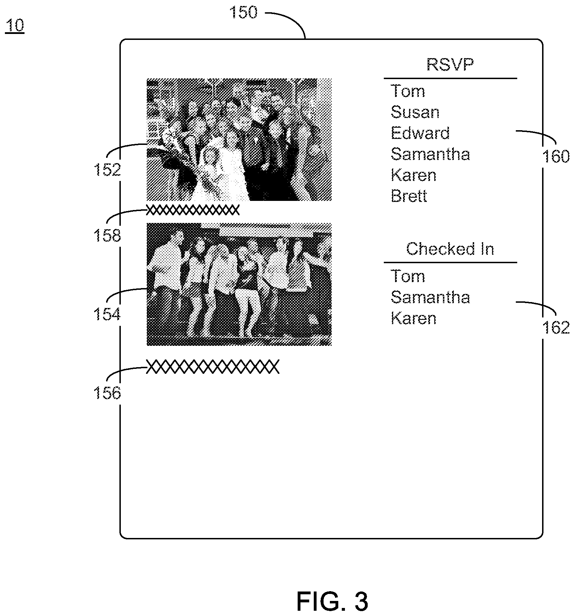

For example, and referring to FIG. 3 a diagrammatic representation of the online collaborative space (e.g., event page 150) associated with the event. As shown, event page 150 may include one or more photographs (e.g., photos 152, 154) that may have been uploaded by one or more event participants. Additionally, event page 150 may include one or more comments (e.g., comment 156) that may have been created by, and uploaded by, an event participant. Event process 10 may receive 104 the content contributions (e.g., photos 152, 154, and comment 156) uploaded by the one or more event participants. Various additional and/or alternative content contributions may also be received by event process 10, e.g., as discussed above. In some embodiments, the content contributions may be arranged and/or indexed within event page 150 based on a time at which each content contribution is received 104 by event process and/or each content contribution may include an associated timestamp that may indicate a time at which each content contribution was received 104.

In some embodiments, the one or more of the content contributions may include metadata content associated with the event. For example, the metadata content may include one or more tags associated with one or more pieces of event content, metadata associated with one or more event participants (whether present at the event or not), such as RSVP status, event check-in status, or the like. For example, and referring still to FIG. 3, one or more metadata tags (e.g., tag 158) may be associated with a content contribution received 104 by event process 10. For example, tag 158 may identify one or more individuals included within photo 152, context information relating to photo 152, or the like. Tag 158 may be received 104 contemporaneously with photo 152 and/or subsequent to receipt 104 of photo 152. Further, tag 158 may be received 104 from the same event participant that uploaded photo 152 and/or may be received 104 from a different event participant. In a similar manner, one or more tags may be associated with other pieces of content (e.g., videos and other media) and/or with other data, such as users, locations, etc.

As another example, in an embodiment, event page 150 may include listing of event participants from whom an affirmative acknowledgment of an intent to participate in the event has been received (e.g., RSVP list 160). In an embodiment, when an affirmative acknowledgement of an intent to participate in the event is received from an event participant, metadata may be associated with the event participant indicating a positive RSVP status with the event participant. Similarly, event page 150 may include a listing of event participants that have indicated that they have arrived at the event and/or are otherwise actively participating in the event (e.g., Checked in listing 162). In an embodiment, when an indication of active participation in the event is received from an event participant, metadata may be associated with the event participant indicating a positive checked-in status. Various additional and/or alternative metadata may be received and/or associated with elements of event page 150, event participants, and/or other aspects of the event.

Event process 10 may also transmit an event content update to a client event application based on the received 104 content contributions to provide a live stream of event content. In an example embodiment, the event content update may include any content contributions that have been received 104 by event process 10, but that have not already been transmitted to the client event application. In an embodiment, event process 10 transmit the event content update to the client event application to provide a live stream of event content. A live stream of the event content may include transmissions of event content updates to the client event application to allow for receipt of the event content update by the client event application generally contemporaneously with the receipt 104 of the content contributions by event process 10 (e.g., with a relatively short time delay between the receipt 104 of the content contribution by event process 10 and transmission of the event content update to the client event application). As such, a user associated with the client event application may receive the and view (e.g., via the client event application) the event content updates generally contemporaneously with capture and/or uploading of the content contributions. The client event application may include an application that a user may utilized to access the online collaborative space associated with the event. Examples of the client event application (e.g., which may include one or more of client-side applications 10c1, 10c2, 10c3, and 10c4 depicted in FIG. 1) may include, but are not limited to, a web browser application and/or a special purpose application. As also generally discussed above, at least a portion of the functionality of the event process may be performed by one or more of client-side applications 10c1, 10c2, 10c3, 10c4.

In an embodiment, the live stream of the event may be achieved based, at least in part, by periodic polling of the online collaborative space by the client event application. Consistent with such an embodiment, the client event application may periodically transmit a polling request for the event content update to event process 10. The polling request may be transmitted at any suitable time interval (e.g., depending upon design criteria and user preference) and, in some embodiments, may be variable depending upon various user and/or system settings. In various example embodiments, the polling time interval may include one second, five seconds, ten second, fifteen seconds, thirty seconds, one minute, or any other suitable polling time interval.

Event process 10 may receive the polling request for the event content update from the client event application. Further, in response to receiving the polling request for the event content update from the client, event process 10 may identify one or more received 104 content contributions since a prior polling request from the client event application. For example, event process 10 may determine a last time that a polling request was received from the client event application. In some embodiments, determining the last time that a polling request was received from the client event application may be based on, at least in part, an identifier associated with the client event application, a user credential (e.g., a user name, password, or the like) utilized to access the online collaborative space associated with the event, or other identifier that may be used to identify one or more of the client event application and/or the user utilizing the client event application. Further, event process 10 may identify one or more content contributions that have been received 104 since a prior polling request was received by the client event application. In some embodiments, content contributions received 104 since the last polling request by the client event application may be identified based on, at least in part, a timestamp associated with the content contribution (e.g., which may indicate a time at which the content contribution was received 104 by event process 10). The identified 110 one or more content contributions received 104 since the prior polling request by the client event application may be the event content update. Upon identifying 110 the one or more content contributions, event process 10 may transmit the event content update to the client event application.

In some embodiment, event process 10 may identify one or more received content contributions within a prior polling time period. For example, in addition and/or as an alternative to determining a prior polling request received from the specific client event application, event process 10 may determine a polling time interval based on system and/or user settings. In some embodiments, when a client event application initially accesses the online collaborative space associated with the event, the client event application may initially download all available content contributions (e.g., all content contributions that have been received 104 as of the time the online collaborative space is accessed). Subsequently, the client event application may transmit a polling request at a polling time interval. In an example embodiment, in which the polling time interval may be thirty seconds, event process 10 may identify one or more content contributions that may have been received 104 within the last thirty seconds (e.g., within the prior polling time period). Event process 10 may identify the one or more content contributions as having been received 104 within the prior polling time period based on, at least in part, a timestamp associated with the content contribution (e.g., which may indicate a time at which the content contribution was received 104 by event process 10). The identified one or more content contributions that may have been received 104 within the prior polling time period may be the event content update. Upon identifying the one or more content contributions, event process 10 may transmit the event content update to the client event application.

In an embodiment, event process 10 may notify a client event application that new content has been received 104, and that the content may be available for download by the client event application. For example, in an embodiment event process 10 may transmit a notification of the event content update to the client event application responsive to receiving 104 at least a first content contribution from one of the plurality of event participants. As generally described above, the event content update may include a content contribution that has not been transmitted to the client event application. In an example embodiment, event process 10 may receive an update request from the client event application responsive to the client event application receiving the transmitted notification. The update request from the client event application may include a request that the event content update be transmitted to the client event application. Event process 10 may further transmit the event content update responsive to the update request from the client event application.

In an embodiment, event process 10 may transmit an event content update to a client event application in response to receiving 104 new event content. For example, and as generally described above, an event participant may upload a content contribution, which may be received 104 by event process 10. Upon receiving 104 the event content contribution from the event participant, event process 10 may transmit an event content update to a client event application, in which the event content update may include the content contribution that was received 104 from the event participant. Consistent with such an embodiment, event process 10 may generally provide the live stream of event content as push content updates.

In an embodiment, event process 10 may include and/or be associated with a party mode (e.g. a feature in a social networking mobile application), which may be designed to allow for the uploading of content contributions (e.g., photos, videos, etc.) taken during an event to the client event application, where they may be viewed by other event participants. In this way, event process 10 may decide whether to upload photos using internal logic, and the event may accept the photos uploaded unilaterally. In some caess, this may be problematic if the application identifies photos to be uploaded incorrectly.

Accordingly, in an embodiment, event process 10 may determine 106 if the received content contributions are associated with the event. This determination may be made using a variety of different techniques, which are described in further detail below. If the received content contributions are associated with the event, event process 10 may transmit 108 an event content update to a client event application based on the received content contributions to provide a live stream of event content. For example, event process 10 may be configured to omit photos from the client event application if certain criteria are met. Some types of criteria may include, but are not limited to, exchangeable image file format (EXIF) information that may be associated with the received content contributions that may identify the content as having been taken after the end time associated with the event, the content may have geolocation information associated therewith that identifies that the content was taken some threshold distance from the event (e.g. more than 1 mile from the event location, etc.), and/or any other suitable method for identifying inapplicable photos or images. For example, in some cases, only authorized users (e.g. event participants) may be allowed to upload photos. As such, event process 10 may be configured to determine the identification of each event participant. In this way, if an unauthorized user attempts to upload content, event process may prevent that content from being uploaded.

In some embodiments, determining whether content is associated with the event may be based upon time information associated with at least one of the event and the content contributions. For example, any content having an associated date and/or time that occurs prior to the beginning of the event may be omitted. This time information may be obtained using any suitable approach, including, but not limited to, analysis of the EXIF data discussed above, metadata associated with the content or any other suitable approach. A comparison of the event time and the time associated with the content may be made in order to determine whether the content is associated with the event.

In some embodiments, the server side protections associated with event process 10 may be configured to parse one or more items of content associated with a particular photo and to compare the identified content with information associated with the event. If the identified content does not match, or substantially match, the information associated with the event, the photo may be omitted.

Additionally and/or alternatively, in an embodiment, received content may be queued and a user option may be provided at the online collaborative space to include or exclude the content upon receiving user authorization. In some embodiments, one or more thresholds may be set, which may define criteria, which if not met, would result in the omission of a particular photo. An example of the threshold concept may include, but is not limited to, exceeding a set threshold distance from the event location, or a certain amount of time after the event has started or concluded, within a certain number of days of the event, etc.

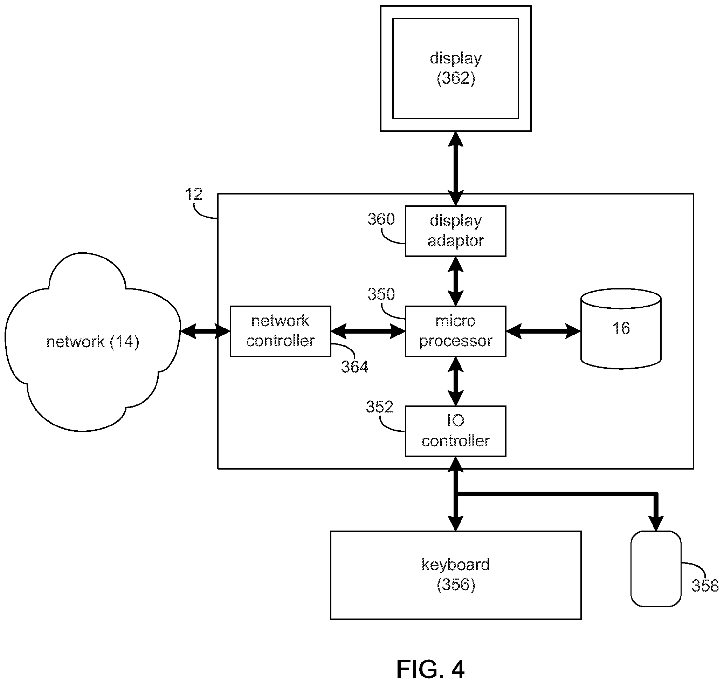

Referring also to FIG. 4, there is shown a diagrammatic view of computing system 12. While computing system 12 is shown in this figure, this is for illustrative purposes only and is not intended to be a limitation of this disclosure, as other configuration are possible. For example, any computing device capable of executing, in whole or in part, event process 10 may be substituted for computing device 12 within FIG. 4, examples of which may include but are not limited to client electronic devices 28, 30, 32, 34.

Computing system 12 may include microprocessor 350 configured to e.g., process data and execute instructions / code for event process 10. Microprocessor 350 may be coupled to storage device 16. As discussed above, examples of storage device 16 may include but are not limited to: a hard disk drive; a tape drive; an optical drive; a RAID device; an NAS device, a Storage Area Network, a random access memory (RAM); a read-only memory (ROM); and all forms of flash memory storage devices. IO controller 352 may be configured to couple microprocessor 350 with various devices, such as keyboard 354, mouse 356, USB ports (not shown), and printer ports (not shown). Display adaptor 360 may be configured to couple display 362 (e.g., a CRT or LCD monitor) with microprocessor 350, while network adapter 364 (e.g., an Ethernet adapter) may be configured to couple microprocessor 350 to network 14 (e.g., the Internet or a local area network).

As will be appreciated by one skilled in the art, the present disclosure may be embodied as a method (e.g., executing in whole or in part on computing device 12), a system (e.g., computing device 12), or a computer program product (e.g., encoded within storage device 16). Accordingly, the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present disclosure may take the form of a computer program product on a computer-usable storage medium (e.g., storage device 16) having computer-usable program code embodied in the medium.

Any suitable computer usable or computer readable medium (e.g., storage device 16) may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium may include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. The computer-usable or computer-readable medium may also be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to the Internet, wireline, optical fiber cable, RF, etc.

Computer program code for carrying out operations of the present disclosure may be written in an object oriented programming language such as Java, Smalltalk, C++ or the like. However, the computer program code for carrying out operations of the present disclosure may also be written in conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through a local area network / a wide area network / the Internet (e.g., network 14).

The present disclosure is described with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, may be implemented by computer program instructions. These computer program instructions may be provided to a processor (e.g., processor 350) of a general purpose computer / special purpose computer / other programmable data processing apparatus (e.g., computing device 12), such that the instructions, which execute via the processor (e.g., processor 350) of the computer or other programmable data processing apparatus, create means for implementing the functions/acts specified in the flowchart and/or block diagram block or blocks.

These computer program instructions may also be stored in a computer-readable memory (e.g., storage device 16) that may direct a computer (e.g., computing device 12) or other programmable data processing apparatus to function in a particular manner, such that the instructions stored in the computer-readable memory produce an article of manufacture including instruction means which implement the function/act specified in the flowchart and/or block diagram block or blocks.

The computer program instructions may also be loaded onto a computer (e.g., computing device 12) or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

The flowcharts and block diagrams in the figures may illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, may be implemented by special purpose hardware-based systems that perform the specified functions or acts, or combinations of special purpose hardware and computer instructions.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the disclosure in the form disclosed. The embodiment was chosen and described in order to best explain the principles of the disclosure and the practical application, and to enable others of ordinary skill in the art to understand the disclosure for various embodiments with various modifications as are suited to the particular use contemplated.

Having thus described the disclosure of the present application in detail and by reference to embodiments thereof, it will be apparent that modifications and variations are possible without departing from the scope of the disclosure defined in the appended claims.

## Claims

1. A computer-implemented method (10) comprising:
defining, on one or more processors, an online collaborative space associated with an event (100), the event having an associated name and location;
associating a plurality of users with the event (102) as event participants;
receiving, on the one or more processors, content contributions uploaded to the online collaborative space from respective electronic devices of one or more of the event participants (104);
preventing an uploading of a content contribution if the content contribution is uploaded by an unauthorized user (106);
determining if the received content contributions are associated with the event (106) based, at least in part, on:
omitting received content contributions that include photos or images taken after an end time associated with the event;
omitting received content contributions that include photos or images having geolocation information that meets a threshold distance from the location associated with the event; and
if the received content contributions are associated with the event, transmitting, on the one or more processors, an event content update to a client event application based on the received content contributions to provide a live stream of event content (108).

2. The computer-implemented method (10) of claim 1, wherein determining (106) is based upon, at least in part, geolocation information and includes comparing an event location with a location associated with the received content contributions.

3. The computer-implemented method (10) of claim 1, wherein determining (106) is based upon, at least in part, identification of one of the event participants.

4. The computer-implemented method (10) of claim 1, further comprising:
providing, at the online collaborative space, a user option to include or exclude received content contributions.

5. A computing system comprising one or more processors, the one or more processors configured to:
define an online collaborative space associated with an event (100), the event having an associated location;
associate a plurality of users with the event (102);
receive content contributions uploaded to the online collaborative space from respective electronic devices of one or more of the event participants (104);
prevent an uploading of a content contribution if the content contribution is uploaded by an unauthorized user (106);
determine if the received content contributions are associated with the event (106) based, at least in part, on:
omitting received content contributions that include photos or images taken after an end time associated with the event;
omitting received content contributions that include photos or images having geolocation information that meets a threshold distance from the location associated with the event; and
if the received content contributions are associated with the event, transmit a notification of an event content update to a client event application based on the received content contributions to the online collaborative space from the plurality of the event participants to provide thereby a live stream of event content (108).

6. The computing system of claim 5, wherein determining (106) is based upon, at least in part, geolocation information and includes comparing an event location with a location of associated with the content contributions.

7. The computing system of claim 5, wherein determining (106) is based upon, at least in part, identification of an event participant.

8. The computing system of claim 5, wherein the one or more processors are further configured to provide, at the online collaborative space, a user option to include or exclude received content contributions.

9. The computing system of claim 5, wherein determining (106) is based upon, at least in part, time information associated with at least one of the event and the content contributions.

10. A computer-readable storage medium having stored thereon instructions, which when executed by a processor result in operations, the operations comprising:
defining, on one or more processors, an online collaborative space associated with an event, the event having an associated location (100);
associating a plurality of users with the event (102) as event participants;
receiving, on the one or more processors, content contributions uploaded to the online collaborative space from respective electronic devices of one or more of the event participants (104);
preventing an uploading of a content contribution if the content contribution is uploaded by an unauthorized user (106);
determining if the received content contributions are associated with the event (106) based, at least in part, on:
omitting received content contributions that include photos or images taken after an end time associated with the event;
omitting received content contributions that include photos or images having geolocation information that meets a threshold distance from the location associated with the event; and
if the received content contributions are associated with the event, transmitting, on the one or more processors, an event content update to a client event application based on the received content contributions to the online collaborative space to provide a live stream of event content (108).

11. The computer-readable storage medium of claim 10, wherein determining (106) is based upon, at least in part, exchangeable image file format (EXIF) information associated with the received content contributions.

12. The computer-readable storage medium of claim 10, wherein determining (106) is based upon, at least in part, geolocation information.

13. The computer-readable storage medium of claim 12, wherein determining (106) based upon geolocation information includes comparing an event location with a location of associated with the content contributions.

14. The computer-readable storage medium of claim 10, wherein determining (106) is based upon, at least in part, identification of one of the event participants.

15. The computer-readable storage medium of claim 10, further comprising: providing, at the online collaborative space, a user option to include or exclude received content contributions.

## Patentansprüche

1. Computerimplementiertes Verfahren (10), das Folgendes umfasst:
Definieren eines Online-Kooperationsraumes, der einem Ereignis (100) zugeordnet ist, auf einem oder mehreren Prozessoren, wobei das Ereignis einen zugeordneten Namen und einen zugeordneten Ort besitzt;
Zuordnen mehrerer Anwender als Ereignisteilnehmer zu dem Ereignis (102);
Empfangen bei dem einen oder den mehreren Prozessoren von Inhaltsbeiträgen, die von entsprechenden elektronischen Einrichtungen eines oder mehrerer Ereignisteilnehmer (104) zu dem Online-Kooperationsraum hochgeladen wurden;
Verhindern eines Hochladens eines Inhaltsbeitrags dann, wenn der Inhaltsbeitrag durch einen unberechtigten Anwender (106) hochgeladen wird;
Bestimmen, ob die empfangenen Inhaltsbeiträge dem Ereignis (106) zugeordnet sind, mindestens teilweise auf der Grundlage von Folgendem:
Auslassen empfangener Inhaltsbeiträge, die Fotos oder Bilder enthalten, die nach einer Endzeit, die dem Ereignis zugeordnet ist, aufgenommen wurden; und
Auslassen empfangener Inhaltsbeiträge, die Fotos oder Bilder enthalten, die Geolokalisierungsinformationen besitzen, die einem Schwellenwertabstand von dem Ort, der dem Ereignis zugeordnet ist, entsprechen; und
dann, wenn die empfangenen Inhaltsbeiträge dem Ereignis zugeordnet sind, Senden, auf dem einen oder den mehreren Prozessoren, einer Ereignisinhaltsaktualisierung zu einer Client-Ereignisanwendung auf der Grundlage der empfangenen Inhaltsbeiträge, um einen Live-Stream von Ereignisinhalt (108) bereitzustellen.

2. Computerimplementiertes Verfahren (10) nach Anspruch 1, wobei das Bestimmen (106) mindestens teilweise auf der Grundlage von Geolokalisierungsinformationen erfolgt und das Vergleichen eines Ereignisortes mit einem Ort, der den empfangenen Inhaltsbeiträgen zugeordnet ist, enthält.

3. Computerimplementiertes Verfahren (10) nach Anspruch 1, wobei das Bestimmen (106) mindestens teilweise auf der Grundlage einer Identifikation eines Ereignisteilnehmers erfolgt.

4. Computerimplementiertes Verfahren (10) nach Anspruch 1, das ferner Folgendes umfasst:
Bereitstellen einer Anwenderoption, empfangene Inhaltsbeiträge einzuschließen oder auszuschließen, in dem Online-Kooperationsraum.

5. Rechensystem, das einen oder mehrere Prozessoren umfasst, wobei der eine oder die mehreren Prozessoren konfiguriert sind, zum
Definieren eines Online-Kooperationsraumes, der einem Ereignis (100) zugeordnet ist, wobei das Ereignis einen zugeordneten Ort besitzt;
Zuordnen mehrerer Anwender zu dem Ereignis (102);
Empfangen von Inhaltsbeiträgen, die von entsprechenden elektronischen Einrichtungen eines oder mehrerer Ereignisteilnehmer (104) zu dem Online-Kooperationsraum hochgeladen wurden;
Verhindern eines Hochladens eines Inhaltsbeitrags dann, wenn der Inhaltsbeitrag durch einen unberechtigten Anwender (106) hochgeladen wird;
Bestimmen, ob die empfangenen Inhaltsbeiträge dem Ereignis (106) zugeordnet sind, mindestens teilweise auf der Grundlage von Folgendem:
Auslassen empfangener Inhaltsbeiträge, die Fotos oder Bilder enthalten, die nach einer Endzeit, die dem Ereignis zugeordnet ist, aufgenommen wurden; und
Auslassen empfangener Inhaltsbeiträge, die Fotos oder Bilder enthalten, die Geolokalisierungsinformationen besitzen, die einem Schwellenwertabstand von dem Ort, der dem Ereignis zugeordnet ist, entsprechen; und
dann, wenn die empfangenen Inhaltsbeiträge dem Ereignis zugeordnet sind, Senden einer Benachrichtigung einer Ereignisinhaltsaktualisierung zu einer Client-Ereignisanwendung auf der Grundlage der empfangenen Inhaltsbeiträge zu dem Online-Kooperationsraum von den mehreren Ereignisteilnehmern, um dadurch einen Live-Stream von Ereignisinhalt (108) bereitzustellen.

6. Rechensystem nach Anspruch 5, wobei das Bestimmen (106) mindestens teilweise auf der Grundlage von Geolokalisierungsinformationen erfolgt und das Vergleichen eines Ereignisortes mit einem Ort, der den empfangenen Inhaltsbeiträgen zugeordnet ist, enthält.

7. Rechensystem nach Anspruch 5, wobei das Bestimmen (106) mindestens teilweise auf der Grundlage einer Identifikation eines Ereignisteilnehmers erfolgt.

8. Rechensystem nach Anspruch 5, wobei der eine oder die mehreren Prozessoren ferner konfiguriert sind, in dem Online-Kooperationsraum eine Anwenderoption bereitzustellen, empfangene Inhaltsbeiträge einzuschließen oder auszuschließen.

9. Rechensystem nach Anspruch 5, wobei das Bestimmen (160) mindestens teilweise auf der Grundlage von Zeitinformationen erfolgt, die dem Ereignis und/oder den Inhaltsbeiträgen zugeordnet sind.

10. Computerlesbares Speichermedium, auf dem Anweisungen gespeichert sind, die, wenn sie durch einen Prozessor ausgeführt werden, zu Vorgängen führen, wobei die Vorgänge Folgendes umfassen:
Definieren eines Online-Kooperationsraumes, der einem Ereignis zugeordnet ist, auf einem oder mehreren Prozessoren, wobei das Ereignis einen zugeordneten Ort (100) besitzt;
Zuordnen mehrerer Anwender als Ereignisteilnehmer zu dem Ereignis (102);
Empfangen auf dem einen oder den mehreren Prozessoren von Inhaltsbeiträgen, die von entsprechenden elektronischen Einrichtungen eines oder mehrerer Ereignisteilnehmer (104) zu dem Online-Kooperationsraum hochgeladen wurden;
Verhindern eines Hochladens eines Inhaltsbeitrags dann, wenn der Inhaltsbeitrag durch einen unberechtigten Anwender (106) hochgeladen wird;
Bestimmen, ob die empfangenen Inhaltsbeiträge dem Ereignis (106) zugeordnet sind, mindestens teilweise auf der Grundlage von Folgendem:
Auslassen empfangener Inhaltsbeiträge, die Fotos oder Bilder enthalten, die nach einer Endzeit, die dem Ereignis zugeordnet ist, aufgenommen wurden; und
Auslassen empfangener Inhaltsbeiträge, die Fotos oder Bilder enthalten, die Geolokalisierungsinformationen besitzen, die einem Schwellenwertabstand von dem Ort, der dem Ereignis zugeordnet ist, entsprechen; und
dann, wenn die empfangenen Inhaltsbeiträge dem Ereignis zugeordnet sind, Senden, auf dem einen oder den mehreren Prozessoren, einer Ereignisinhaltsaktualisierung zu einer Client-Ereignisanwendung auf der Grundlage der empfangenen Inhaltsbeiträge, um einen Live-Stream von Ereignisinhalt (108) bereitzustellen.

11. Computerlesbares Speichermedium nach Anspruch 10, wobei das Bestimmen (106) mindestens teilweise auf der Grundlage von austauschbaren Bilddateiformatinformationen (EXIF-Informationen), die den empfangenen Inhaltsbeiträgen zugeordnet sind, erfolgt.

12. Computerlesbares Speichermedium nach Anspruch 10, wobei das Bestimmen (106) mindestens teilweise auf der Grundlage von Geolokalisierungsinformationen erfolgt.

13. Computerlesbares Speichermedium nach Anspruch 12, wobei das Bestimmen (106) auf der Grundlage von Geolokalisierungsinformationen das Vergleichen eines Ereignisortes mit einem Ort, der den Inhaltsbeiträgen zugeordnet ist, umfasst.

14. Computerlesbares Speichermedium nach Anspruch 10, wobei das Bestimmen (106) mindestens teilweise auf der Grundlage einer Identifikation eines Ereignisteilnehmers erfolgt.

15. Computerlesbares Speichermedium nach Anspruch 10, das ferner Folgendes umfasst: Bereitstellen einer Anwenderoption, empfangene Inhaltsbeiträge einzuschließen oder auszuschließen, in dem Online-Kooperationsraum.

## Revendications

1. Un procédé mis en oeuvre par ordinateur (10) comprenant :
le fait de définir, sur un ou plusieurs processeurs, un espace collaboratif en ligne associé à un événement (100), l'événement ayant un nom et un emplacement associés ;
le fait d'associer une pluralité d'utilisateurs à l'événement (102) en tant que participants à l'événement ;
le fait de recevoir, sur le ou les processeurs, des contributions de contenu téléchargées dans l'espace collaboratif en ligne à partir des dispositifs électroniques respectifs d'un ou de plusieurs des participants (104) à l'événement ;
le fait d'empêcher le téléchargement d'une contribution de contenu si la contribution de contenu est téléchargée par un utilisateur non autorisé (106) ;
le fait de déterminer si les contributions de contenu reçues sont associées à l'événement (106) en se basant, au moins en partie, sur :
le fait d'omettre les contributions de contenu reçues qui incluent des photos ou des images prises après une heure de fin associée à l'événement ;
le fait d'omettre les contributions de contenu reçues qui incluent des photos ou des images ayant des informations de géolocalisation qui sont en lien avec une distance de seuil depuis l'emplacement associé à l'événement ; et
si les contributions de contenu reçues sont associées à l'événement, le fait de transmettre, sur le ou les processeurs, une mise à jour de contenu d'événement à une application d'événement client sur la base des contributions de contenu reçues pour fournir un flux en direct de contenu d'événement (108).

2. Le procédé mis en oeuvre par ordinateur (10) selon la revendication 1, dans lequel le fait (106) de déterminer est basé, au moins en partie, sur des informations de géolocalisation et comprend le fait de comparer un emplacement d'événement avec un emplacement associé aux contributions de contenu reçues.

3. Le procédé mis en oeuvre par ordinateur (10) selon la revendication 1, dans lequel le fait (106) de déterminer est basé, au moins en partie, sur l'identification de l'un des participants à l'événement.

4. Le procédé mis en oeuvre par ordinateur (10) selon la revendication 1, comprenant en outre :
le fait de fournir, dans l'espace collaboratif en ligne, une option utilisateur pour inclure ou exclure les contributions de contenu reçues.

5. Un système informatique comprenant un ou plusieurs processeurs, le ou les processeurs étant configurés pour :
définir un espace collaboratif en ligne associé à un événement (100), l'événement ayant un emplacement associé ;
associer une pluralité d'utilisateurs à l'événement (102) ;
recevoir des contributions de contenu téléchargées dans l'espace collaboratif en ligne à partir des dispositifs électroniques respectifs d'un ou de plusieurs participants (104) à l'événement ;
empêcher le téléchargement d'une contribution de contenu si la contribution de contenu est téléchargée par un utilisateur non autorisé (106) ;
déterminer si les contributions de contenu reçues sont associées à l'événement (106) en se basant, au moins en partie, sur :
le fait d'omettre les contributions de contenu reçues qui incluent des photos ou des images prises après une heure de fin associée à l'événement ;
le fait d'omettre les contributions de contenu reçues qui incluent des photos ou des images ayant des informations de géolocalisation qui sont en lien avec une distance de seuil de l'emplacement associé à l'événement ; et
si les contributions de contenu reçues sont associées à l'événement, transmettre une notification de mise à jour de contenu d'événement à une application d'événement client basée sur les contributions de contenu reçues dans l'espace collaboratif en ligne depuis la pluralité des participants à l'événement, afin de fournir ainsi un flux de contenu d'événement (108) en direct.

6. Le système informatique selon la revendication 5, dans lequel le fait (106) de déterminer est basé, au moins en partie, sur des informations de géolocalisation et comprend le fait de comparer un emplacement d'événement avec un emplacement associé aux contributions de contenu.

7. Le système informatique selon la revendication 5, dans lequel le fait (106) de déterminer est basé au moins en partie sur l'identification d'un participant à un événement.

8. Le système informatique selon la revendication 5, dans lequel le ou les processeurs sont en outre configurés pour fournir, au niveau de l'espace collaboratif en ligne, une option utilisateur pour inclure ou exclure des contributions de contenu reçues.

9. Le système informatique selon la revendication 5, dans lequel le fait (106) de déterminer est basé au moins en partie sur des informations temporelles associées à au moins une des contributions d'événement et de contenu.

10. Un support de stockage lisible par ordinateur sur lequel sont stockées des instructions qui, lorsqu'elles sont exécutées par un processeur, entraînent des opérations, les opérations comprenant :
le fait de définir, sur un ou plusieurs processeurs, un espace collaboratif en ligne associé à un événement, l'événement ayant une localisation associée (100) ;
le fait d'associer une pluralité d'utilisateurs à l'événement (102) en tant que participants à l'événement ;
le fait de recevoir, sur le ou les processeurs, des contributions de contenu téléchargées dans l'espace collaboratif en ligne à partir des dispositifs électroniques respectifs d'un ou de plusieurs des participants (104) à l'événement ;
le fait d'empêcher le téléchargement d'une contribution de contenu si la contribution de contenu est téléchargée par un utilisateur non autorisé (106) ;
le fait de déterminer si les contributions de contenu reçues sont associées à l'événement (106) sur la base, au moins en partie :
du fait d'omettre les contributions de contenu reçues qui incluent des photos ou des images prises après une heure de fin associée à l'événement ;
du fait d'omettre les contributions de contenu reçues qui incluent des photos ou des images ayant des informations de géolocalisation qui sont en lien avec une distance de seuil de l'emplacement associé à l'événement ; et
si les contributions de contenu reçues sont associées à l'événement, le fait de transmettre, sur lesdits un ou plusieurs processeurs, une mise à jour de contenu d'événement à une application d'événement client sur la base des contributions de contenu reçues dans l'espace collaboratif en ligne, afin de fournir un flux en direct de contenu d'événement (108).

11. Le support de stockage lisible par ordinateur selon la revendication 10, dans lequel le fait (106) de déterminer est basé au moins en partie sur des informations de format de fichier d'image échangeable (EXIF) associées aux contributions de contenu reçues.

12. Le support de stockage lisible par ordinateur selon la revendication 10, dans lequel le fait (106) de déterminer est basé, au moins en partie, sur des informations de géolocalisation.

13. Le support de stockage lisible par ordinateur selon la revendication 12, dans lequel le fait (106) de déterminer sur la base d'informations de géolocalisation comprend le fait de comparer un emplacement d'événement avec un emplacement associé aux contributions de contenu.

14. Le support de stockage lisible par ordinateur selon la revendication 10, dans lequel le fait (106) de déterminer est basé, au moins en partie, sur l'identification de l'un des participants à l'événement.

15. Le support de stockage lisible par ordinateur selon la revendication 10, comprenant en outre : le fait de fournir, dans l'espace collaboratif en ligne, une option utilisateur pour inclure ou exclure des contributions de contenu reçues.
